# EUROPEAN PATENT APPLICATION

(11) **EP 3 364 305 A1**
(43) Date of publication of application: **22.08.2018**
(21) Application number: 17156927.0
(22) Date of filing: 20.02.2017
(51) Int. Cl.: G06F 13/38, G06F 13/42

(54) **SCHEDULER**

(71) Applicant: Siemens Aktiengesellschaft, 80333 München (DE)
(72) Inventor: Søvik, Stian Juul, 7075 Trondheim (NO)
(74) Representative: Maier, Daniel Oliver

(57) **Abstract**

A master unit (2) of a serial peripheral interface (SPI) comprises a scheduler (33) for scheduling messages for transmission on an SPI bus (4) and one or more application modules (10, 11, 12) for generating the messages. The scheduler (33) comprises one or more queues (13, 14, 15) in a queuing module to receive messages from the application module and an arbitration module (30) for determining the next message in a queue for transmission on the SPI bus. In a master unit (4) comprising only one application module, the queuing module comprises two or more queues and in a scheduler (33) comprising only one queue in the queuing module, the master unit comprises two or more application modules.

## Description

This invention relates to a scheduler and method of scheduling, in particular for embedded systems.

Examples of embedded systems include condition monitoring, or real time control of power electronics. These applications require data to be collected from many different sources and provided to a controller. Different sources, e.g. sensors may each be provided with integrated circuits as part of the embedded system. It can be difficult to control multiple peripheral sources in a single communication link without adding a great deal of complexity.

In accordance with a first aspect of the present invention, a master unit of a serial peripheral interface (SPI) comprises a scheduler for scheduling messages for transmission on an SPI bus and one or more application modules for generating the messages; the scheduler comprising one or more queues in a queuing module to receive messages from the, or each, application module and an arbitration module for determining the next message in a queue for transmission on the SPI bus; wherein in a master unit comprising only one application module, the queuing module comprises two or more queues; and wherein, in a scheduler comprising only one queue in the queuing module, the master unit comprises two or more application modules.

In one embodiment, in a master unit comprising only one application module, each of the queues has a different priority for sending of the messages in the queue.

In another embodiment, in a scheduler comprising only one queue, each of the application modules may submit messages in that queue.

In accordance with a second aspect of the present invention, a serial peripheral interface scheduling system comprises a plurality of serial peripheral interface slave units; a serial peripheral interface bus; and a serial peripheral interface master unit according to the first aspect, for controlling communication on the SPI bus; wherein the scheduler is adapted to detect a priority of a message received from an application module in a queue in the scheduler, awaiting access to the SPI bus; and wherein the arbitration module controls sending of messages in the or each queue in order of priority, via the SPI bus.

Preferably, the slave units comprise two or more of an analogue to digital converter, accelerometer, memory, actuator, measurement unit, or real time clock.

Preferably, the memory comprises an electrically erasable programmable read only memory.

Preferably, the analogue to digital converters receive inputs from sensors.

In accordance with a third aspect of the present invention, a method of scheduling messages between a plurality of serial peripheral interface slave units and a serial peripheral interface master unit of a system according to the second aspect comprises generating a message in an application module; in the scheduler detecting a priority level of the message; allocating the message to a queue in the queuing module of the scheduler, in the arbitration module, determining and extracting a message having the highest priority level of any waiting messages from any queue; and sending the message via the SPI bus.

In one embodiment, in a master unit comprising only one application module, each of the queues has a different priority for sending of the messages in the queue.

Preferably, each message is allocated to a queue according to the determined priority level of the message.

In another embodiment, in a scheduler comprising only one queue, each of the application modules may submit messages in that queue.

Preferably, the method further comprises checking for messages in progress, before extracting a message to be sent.

Preferably, the next message is sent after any message in progress has completed.

Preferably, the scheduler allocates messages from each application to any of the queues, according to its determined priority.

Preferably, the messages comprise one or more of information on data to be transmitted, location to store received data, message length, SPI configuration, application-specific functions to be called before or after the message has been transmitted, and status information.

Preferably, the method comprises receiving new messages in the queues and repeating the step of determining the message with the highest priority

In accordance with a fourth aspect of the present invention, a method of condition monitoring comprises receiving inputs from a plurality of data sources in an operational system, scheduling the messages for transmission on a serial peripheral interface bus in accordance with a method according to the third aspect; and at the controller, deriving a system condition from the received messages.

An example of scheduler and method of operation according to the present invention will now be described with reference to the accompany drawings in which:
Figure 1 is a block diagram of a system including a scheduler according to the present invention;
Figure 2 illustrates an example of a scheduler according to the invention;
Figure 3 represents traffic on the SPI bus when using the scheduler of Fig.2; ; and,
Figure 4 is a flow diagram of a method of operation of a scheduler according to the present invention.

Condition monitoring, such as environmental condition monitoring, or real time control of power electronics are examples of uses of embedded systems. In embedded systems, typically using microprocessors implemented for a specific purpose, rather than a general purpose processor, or computer, there is a need for communication in real-time, or with only a very minimal delay. As part of an embedded control system, different integrated circuits (ICs) may communicate in order to perform the desired function of the control system. A widespread communication bus used for this purpose is serial peripheral interface (SPI), which is a synchronous full-duplex serial data link allowing synchronous, full-duplex, serial data transmission between a micro controller and one or more peripheral devices, e.g. peripheral integrated circuits (ICs). SPI has one master unit which controls all communication on the bus, typically, a micro controller unit (MCU) and one or more slave units, typically the peripheral ICs. SPI is used for very local communication, typically within a circuit board. In this context control is provided by the MCU, typically, placed on the same circuit board as the peripheral devices, or sources. One MCU may control several specific purpose peripheral ICs, such as memories, timers, measurement units, or actuators. However, in the case of peripheral ICs in embedded systems, it may be difficult to control several different peripheral ICs on the same SPI communication link from an MCU in embedded control systems without increasing complexity and decreasing modularity of software, while still satisfying real-time requirements..

Peripheral ICs have various requirements regarding communication setup, such as clock timing, polarity, and bit rate. It is not uncommon to place several peripheral ICs of the same type on the same SPI bus, for instance to increase memory capacity or to measure several signals. However, if the peripheral ICs on the SPI bus have different configurations, this increases the complexity for the controlling software on the MCU. Furthermore, as the different peripheral ICs serve different purposes, different parts of the software, for example, application modules, need access to the peripheral ICs in a coordinated manner, further complicating matters. Other issues may arise when some parts of the software have higher priority, for instance due to real-time requirements, while only one slave unit can be addressed on the SPI bus at any instant. Finally, as some units might be accessed at regular intervals and other units sporadically, it might not be possible to pre-determine a deterministic schedule of accessing the SPI-bus.

One way to allow several types of peripheral units on the same SPI interface is to divide the available time on the SPI bus between the different software processes, e.g. within a periodic cycle time. Each process is allotted the time required for completing its communication in each cycle. An example is shown in table 1 below, assuming a cycle time of 200 ms.

**Table 1**

| Process | Start time relative to beginning of cycle |
|---|---|
| EEPROM communication | 0 ms |
| ADC 1 reading | 100 ms |
| ADC 2 reading | 120 ms |
| ADC 3 reading | 140 ms |

This solution is deterministic and simple, however, it has the disadvantages that it imposes restrictions on the scheduling of the processes, and it reserves time on the SPI bus in each cycle that might not be used.

Another option is to limit to only using one type of peripheral unit per SPI interface, i.e. if the MCU has several independent SPI interfaces, then only one type of peripheral unit, for example only EEPROMs, or only ADCs, is provided on each bus. Assuming that one software process controls one type of peripheral unit, this allows the processes to operate independently of each other. However, this requires an MCU containing several SPI interfaces, which increases cost and puts restrictions on the MCUs that may be used in a particular application. Furthermore, it consumes circuit board area and MCU pins as each bus needs its own connections.

It is desirable to find a way to operate the SPI scheduler more effectively. The present invention addresses the problems set out above by adapting the operation of an SPI scheduler to achieve the required communication between the MCU and peripherals. The SPI scheduler provides deterministic scheduling of SPI communication with various devices, while allowing application modules using the SPI scheduler to be designed in a modular fashion. As a first step, an SPI message object is defined, which contains information on data to be transmitted, location to store received data, message length, SPI configuration, status information, and optionally application-specific functions to be called before or after the message has been transmitted. Various application modules needing SPI communication create SPI message objects as required.

The SPI scheduler comprises one or more FIFO queues. If there is only one queue, used with multiple application modules to generate messages, the invention provides the advantage that each application module does not need its own queue and its own SPI bus, but allows decoupling of modules and various SPI configurations, even without specific prioritisation in the one queue. Where more than one FIFO queue is provided, each queue may be assigned a different priority. Thus, even with only a single application module generating messages, it is possible to improve performance by giving a priority level to each message that is generated and allocating each message to the queue for its priority, so that higher priority messages are given access to the SPI bus before earlier generated, but lower priority, ones. This enables the application modules to prioritise messages to be sent by adding the messages to the queue which has a priority corresponding to the priority required by the software module or message. The SPI scheduler then handles the messages in prioritized order. However, a message that is in progress will not be interrupted, as this would risk putting the peripheral IC in an undefined state. Once that in-progress message has completed, then a priority based decision is made by an arbitration unit as to which message to send next.

Before sending a message, the SPI scheduler reconfigures the SPI controller in the MCU according to the requirements of the SPI peripheral device it is preparing to communicate with. This configuration is retrieved from the SPI message object.

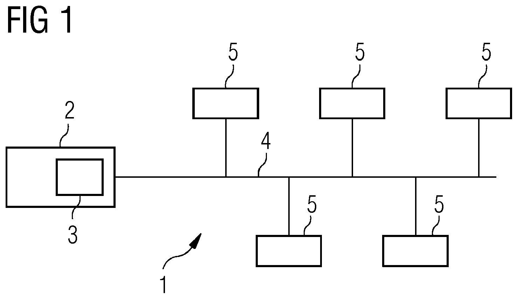

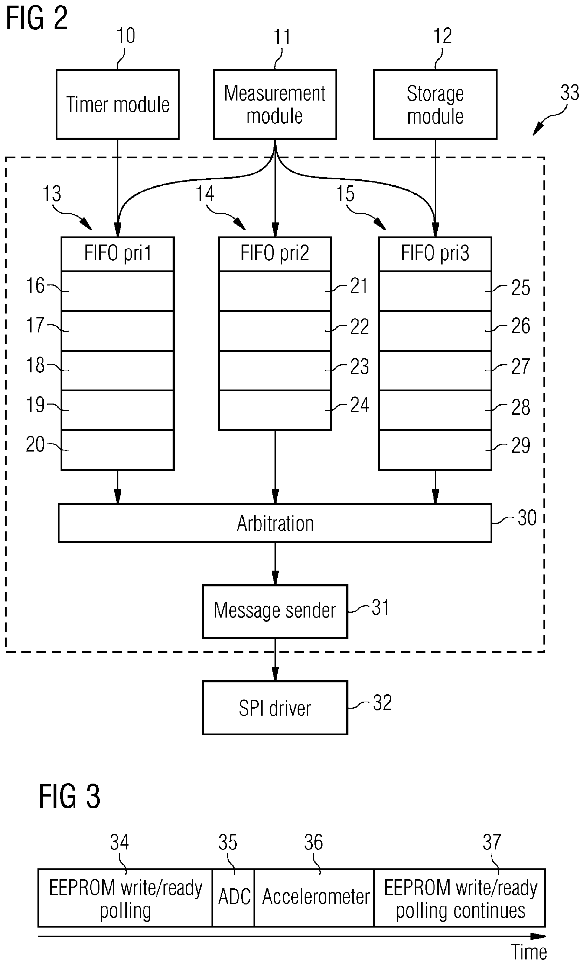

Fig.1 is a block diagram illustrating the main elements of a scheduling system according to the present invention. A scheduling system 1 comprises an MCU which acts as an SPI master unit 2, incorporating an SPI scheduler 3, a serial peripheral interface bus 4 and a plurality of peripheral units 5. Fig.2 is an example illustration of operation of an SPI scheduler according to the invention. In the example shown, three software modules use the scheduler to solve the problem of coordination, although more or fewer application modules could be used, dependent on the particular embedded system application. The software modules comprise a timer module 10, a measurement module 11 and a storage module 12. The modules shown in this example are associated with eleven SPI peripheral units 5 in total, but more or fewer SPI units may be used. The units in this example comprise nine analogue-to-digital converters (ADCs), one real time clock (RTC) and one EEPROM (electrically erasable programmable read only memory). The EEPROM is typically a small non-volatile memory used for storing data, such as configuration parameters. Other types of unit may make up the combination, for example, accelerometers I/O expanders, temperature sensors or other devices. The different types of units have different communication requirements with regards to bit rate and clock polarity.

The measurement module 11 gathers measurements of physical states from various sources, such as voltage, current or temperature measurements. In this example, the values gathered from ADCs 1 to 4 are needed for real-time control and need to be available within a certain deadline. The values from ADCs 5 to 8 are also needed within a deterministic worst-case delay, however with less stringent requirements than ADCs 1 to 4. The values from ADC9 have low priority, so these may be used and processed whenever the SPI bus is available.

The timer module 10 communicates with the RTC, and the value needs to be available within a certain delay in order to maintain the correct time.

Finally, the storage module 12 sporadically reads or writes data. Data read is only performed during start-up of the MCU, while writes are initiated by a user's request to change a configuration parameter. Communication with the EEPROM has a relatively high demand for time as compared to other use of the communication bus, due to the size of the data transfers involved and the slow speed of the EEPROM IC. However, there is no strict requirement for completion, for example, a minimum time between the instant that reading or writing was initiated and its completion, meaning that this communication has low priority.

For the example shown in Fig.2, there are multiple application modules 10, 11, 12 and also multiple queues. However, although not described in detail for this example, as mentioned above, some of the benefits of the present invention may be had with only one queue 13 in the scheduler 33 when there are multiple application modules because conventional operation of the master unit and SPI bus requires a separate bus for messages from each application module. The scheduler allows all messages to be added to one queue as they are generated and that in effect gives the message its priority.

In the Fig.2 example, the different requirements of each module are dealt with by defining three queues 13, 14, 15 within the SPI scheduler 33, each queue having a different priority and allowing the software modules 10, 11, 12 to add messages to any of the queues according to the urgency of the message. Given that the software consisting of module 10, 11, 12 controls the rate of messages added to queues 13, 14, 15, a deterministic worst-case delay can be calculated for all messages. The deterministic worst-case response time is guaranteed by splitting the total data transfers in messages into smaller size parts, so that the highest priority message waiting at any time will not have to wait longer than the time it takes to transmit one message.

The illustration shows a snapshot of the state of the scheduler 33, but the queues 13, 14, 15 of the queuing module are repeatedly filled with messages from the software modules 10, 11, 12, and continuously sent to the SPI bus 4 whenever there are messages in any queue. Messages from different modules are interleaved in the queues. For example, the first queue 13 for messages having the highest priority includes messages 16, 17, 19, 20 to ADCs 1 to 4 and a message 18 to the RTC. An arbitration module 30 of the scheduler unit 33 determines which message should be sent next. The arbitration module starts by selecting and sending messages from the 1 st priority queue 13 - the queue with the highest priority - until that queue is empty. A message sender 31 sets the SPI configuration and sends the message. Outside the queuing module, an SPI driver 32 puts the message onto the bus. The arbitration module 30 then takes and sends messages from the 2nd priority queue 14 - the queue with the next highest priority - until that queue is empty. In this example, the messages 21, 22, 23, 24 to ADCs 6 to 8 are in this queue. Finally the arbitration module takes and sends messages from the 3rd priority queue 15 - the queue with the lowest priority in a three queue system. In this queue, there is a message 25 to read from the EEPROM and messages 27, 28, 29 to store to the EEPROM, as well as a message 26 to read from ADC 9. If there were more queues with different priorities, the arbitration unit 30 would take and send in descending order of priority. During this process, new messages may be added to the different queues. The effect of this is that after the message currently being transmitted has been completed, the next message in the highest priority queue will be selected, even if the previous message was in a lower priority queue and that queue still has messages waiting to be sent.

An example has been taken from a real application, running on a custom made control board. In this example, the SPI bus 4 was shared between 13 ADCs, one accelerometer and an EEPROM. ADC and accelerometer readings were taken periodically and were bound to real-time deadlines. ADC readings were more urgent than accelerometer readings. The EEPROM was accessed sporadically, in response to a user instructing the software to store configuration parameters. The EEPROM is only able to store data in small portions, known as "pages", and requires a significant time after one page write before it is ready to store a new page. In this time between pages being stored, the software polls the EEPROM to determine if it is ready to accept new data. Hence, there is a conflict between the sporadic EEPROM writes which might take several hundreds of milliseconds, and the cyclic real-time measurements taken from the ADCs and accelerometer. This is solved using the SPI scheduler 3 with multiple queues 13, 14, 15 in decreasing priority order. For this example, the order of priority for the queues is ADC readings, accelerometer readings and EEPROM communication.

Fig.3 represents an example timeline of traffic on the SPI bus when using the SPI scheduler of the present invention. In a period 34 there is EEPROM write or read polling. Between each page write, the EEPROM driver polls the EEPROM to check whether it is ready to accept new transfers. After a period of time, an indication is received that other software modules need access to the SPI bus simultaneously, namely the modules reading the ADCs and the accelerometer. As the ADC messages are put in the queue with the highest priority, the ADC messages are granted access 35 as soon as the SPI message currently transmitting to the EEPROM finishes. Thereafter, the higher priority messages have their turn. After the ADCs, then the accelerometer reading is performed 36, before the communication from the EEPROM software module is resumed 37.

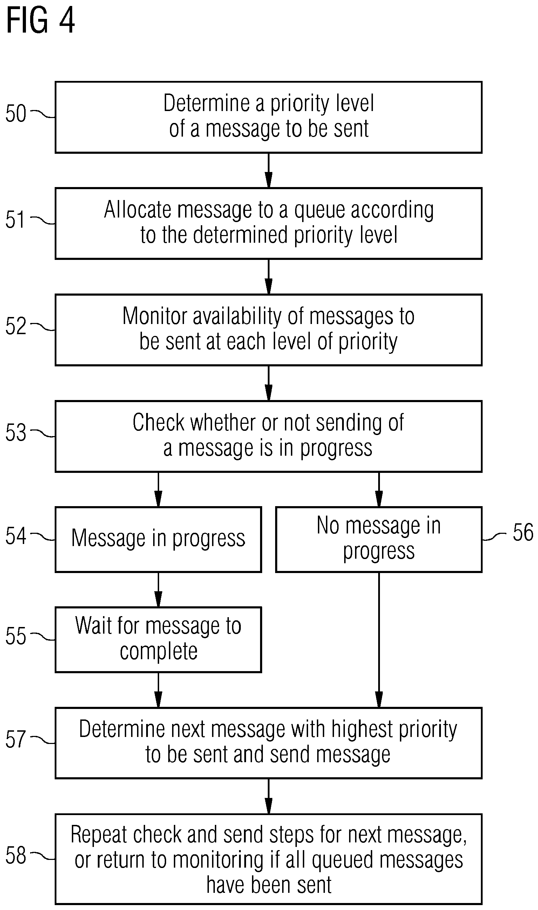

Fig.4 is a flow diagram illustrating a method of operation of the SPI scheduler according to the present invention. For each message 16 to 29 that has been generated and needs to be sent on the SPI bus 4, the software module generating the message determines 50 which priority level applies. If there is only one software module generating the messages, then those messages are divided by their allocated priority. If there are multiple software modules generating the messages, then each may allocate any of the available priority levels. Having determined the priority level, the message is added 51 to a queue for that priority level in the scheduler. Messages at the same priority level are sent in the order in which they have been received. If there was only one queue for the messages from all of the software modules, then all messages have the same priority level and are sent in the order in which they join the queue.

Each queue 13, 14, 15 is monitored 52 by the arbitration module of the scheduler and when there is an indicator of a queue having at least one message waiting, then a check 53 is made by the arbitration module to determine whether there is a message currently in progress 54, or no message in progress 56. If there is a message in progress 54, then it is necessary to wait 55 for that message to complete before the arbitration module 30 determines 57 which the next message is, with the highest priority, waiting to be sent. If there is no message in progress 56, or after waiting 55 for the message to complete, then the highest priority message 20 is extracted 57 from its queue 13 and the SPI configuration is set for the message to be sent by the message sender and transferred to the SPI driver 32 to be sent on the SPI bus 4. The scheduler continues to operate 58, either by repeating the check and send steps 53, 57 to send the next message, or returning to the monitoring step 52 if all queued messages have been sent.

Another example of an embedded system is real time control of power electronics. Although the essential measurements and actuators of power electronic control often require lower latencies than those typically provided by SPI, supplemental measurements such as temperatures, and digital input/output signals such as status signals and auxiliary switch control signals with lower performance requirements, are often necessary too. In such a case, typical application modules in the master unit may perform temperature measurement and digital input/output control, and typical slave units may be ADCs and I/O expanders.

The advantages of the present invention include the ability to guarantee response times in real-time systems and flexible communication with multiple peripheral ICs of varying type on the same SPI bus. The invention enables decoupling of software modules communicating on the same SPI bus and enhanced modularity due to the separated SPI communication from application code. A design supporting interrupt based implementation gives a low software overhead and saves hardware cost and complexity, compared to alternative solutions, such as those described hereinbefore.

## Claims

1. A master unit of a serial peripheral interface (SPI), the master unit comprising a scheduler for scheduling messages for transmission on an SPI bus and one or more application modules for generating the messages; the scheduler comprising one or more queues in a queuing module to receive messages from the application module and an arbitration module for determining the next message in a queue for transmission on the SPI bus; wherein in a master unit comprising only one application module, the queuing module comprises two or more queues; and wherein, in a scheduler comprising only one queue in the queuing module, the master unit comprises two or more application modules.

2. A master unit according to claim 1, wherein, in a master unit comprising only one application module, each of the queues has a different priority for sending of the messages in the queue.

3. A master unit according to claim 1, wherein in a scheduler comprising only one queue, each of the application modules may submit messages in that queue.

4. A serial peripheral interface scheduling system comprising a plurality of serial peripheral interface slave units; a serial peripheral interface bus; and a serial peripheral interface master unit according to any preceding claim, for controlling communication on the SPI bus; wherein the scheduler is adapted to detect a priority of a message received from an application module in a queue in the scheduler, awaiting access to the SPI bus; and wherein the arbitration module controls sending of messages in the or each queue in order of priority, via the SPI bus.

5. A system according to claim 4, wherein the slave units comprise two or more of an analogue to digital converter, accelerometer, memory, actuator, measurement unit, or real time clock.

6. A system according to claim 5, wherein the memory comprises an electrically erasable programmable read only memory.

7. A system according to claim 5 or claim 6, wherein the analogue to digital converters receive inputs from sensors.

8. A method of scheduling messages between a plurality of serial peripheral interface slave units and a serial peripheral interface master unit of a system according to any of claims 4 to 7, the method comprising generating a message in an application module; in the scheduler detecting a priority level of the message; allocating the message to a queue in the queuing module of the scheduler, in the arbitration module, determining and extracting a message having the highest priority level of any waiting messages from any queue; and sending the message via the SPI bus.

9. A method according to claim 8, wherein, in a master unit comprising only one application module, each of the queues has a different priority for sending of the messages in the queue.

10. A method according to claim 8 or claim 9, wherein each message is allocated to a queue according to the determined priority level of the message.

11. A method according to any of claims 8 to 10, wherein the scheduler allocates messages from each application to any of the queues, according to its determined priority.

12. A method according to any of claims 8 to 11, wherein the method comprises receiving new messages in the queues and repeating the step of determining the message with the highest priority

13. A method according to claim 8, wherein in a scheduler comprising only one queue, each of the application modules may submit messages in that queue.

14. A method according to any of claims 8 to 13, wherein the method further comprises checking for messages in progress, before extracting a message to be sent.

15. A method according to claim 14, wherein the next message is sent after any message in progress has completed.

16. A method according to any of claims 8 to 15, wherein the messages comprise one or more of information on data to be transmitted, location to store received data, message length, SPI configuration, application-specific functions to be called before or after the message has been transmitted, and status information.

17. A method of condition monitoring, the method comprising receiving inputs from a plurality of data sources in an operational system, scheduling the messages for transmission on a serial peripheral interface bus in accordance with a method according to any of claims 8 to 16; and at the controller, deriving a system condition from the received messages.
